# EUROPÄISCHE PATENTANMELDUNG

(11) **EP 4 567 834 A1**
(43) Veröffentlichungstag der Anmeldung: **11.06.2025**
(21) Anmeldenummer: 24188780.1
(22) Anmeldetag: 16.07.2024
(51) Int. Cl.: G21B 1/00, G21B 1/11

(54) **SPEZIELLES REAKTORSYSTEM FÜR DIE KERNFUSION**

(30) Priorität: 23.08.2023 DE 102023003466
(71) Anmelder: Biener, Hans, Prof. Dr., 81547 München (DE)
(72) Erfinder: Biener, Hans, Prof. Dr., 81547 München (DE)
(74) Vertreter: Straus, Alexander

(57) **Zusammenfassung**

Die vorliegende Erfindung betrifft ein neues Reaktorsystem, bei dem die den Reaktorraum umgebenden Wände bzw. Bauteile aus hochschmelzenden Materialien geformt sind, und sich in einem kühlmedium bewegt werden, so dass die Reaktionswärme abgeführt werden kann.

## Beschreibung

Eine wesentliche Quelle für die ungeheuren Energieströme des Weltalls, z.B. die gewaltige Strahlungsenergie der Sterne wie unserer Sonne, ist die Fusion von Wasserstoff zu Helium, energetisch gemäß Einsteins Formel E = m·c² (Energie gleich Masse mal Quadrat der Lichtgeschwindigkeit).

Eine Nutzung dieser Reaktion für die Energiegewinnung auf der Erde hätte größte Auswirkungen für die Menschheit. Unbeschränkte Energie, ohne schädliche Nebenprodukte, Abgase und Nebenwirkungen könnte zum Beispiel zur Meerwasserentsalzung in größtem Maßstab und damit Fruchtbarmachung riesiger Wüstengebiete führen. Saubere Heizung, abgasreduzierte Industrieproduktion, billige Energie insgesamt, windrad- und schornsteinfreie Landschaften wäre eine naheliegende Folge. Trotz dieser höchst erstrebenswerten Ziele und zahlloser Unternehmungen und Entwicklungsfirmen-Gründungen sowie massiver staatlicher Unterstützung steht ein industrieller Erfolg aber noch immer aus. Ein Grund Ist die ungeheure und für die Reaktion auch erforderliche Wärmeentwicklung von etwa einer Million Grad C. Sie spielt im Inneren der Sterne keine Rolle, während ihre terrestrische Beherrschung bisher noch ungelöst ist. Es fehlt an einem Reaktionsraum, einem für diese ungeheure thermische Belastung geeigneten Reaktor, der einerseits der gewaltigen Fusionswärme zuverlässig widersteht und gleichzeitig ihre Ableitung und sogar anschließende energetische Nutzung ermöglicht.

In kleinstem Maßstab ist die Fusion von Wasserstoff zu Helium technisch bereits gelungen. Durch intensivste Laserbestrahlung einer erbsengroßen Probe durch angegeben zusammen 200 fokussierte Laser wurde kurzzeitig etwas mehr Energie erzeugt als eingesetzt. Das Ganze fand in einem großen Raum statt, so daß die entstandene Wärme kein Problem darstellen konnte. Für eine technische Lösung und Nutzung ist neben der Erzeugung einer für die Reaktion notwendigen Ausgangstemperatur von mindestens 900.000 Grad Celsius, die etwa mit Großlasern erreichbar ist, sowohl ein geeignetes Reaktionsgefäß - ein Reaktor - erforderlich als auch ein technisch leicht gangbarer Weg, die generierte ungeheure Reaktionstemperatur praktisch zu nutzen, zum Beispiel zum Antrieb von Turbinen, für mechanische Einsätze oder, vor allem, zur Erzeugung von elektrischer Energie, Strom, in größtem Maßstab.

Die vorliegende Erfindung beinhaltet beides: Die Beschreibung ganz speziell entwickelter Reaktoren zum Einsatz bei den erforderlichen ungeheuren Temperaturen sowie die Nutzung der Reaktionswärme über z.B. Dampferzeugung für die verlustfreie Gewinnung elektrischer Energie. Grundlage aller dieser Reaktoren ist, daß sie jeweils aus einzelnen beweglichen Formkörpern - wie zum Beispiel hochschmelzenden Metallplatten - gebildet werden, die in einem Kühlbad, vorzugsweise Wasser, mit einstellbarer Geschwindigkeit so zusammenlaufen, daß sie die ständig wechselnden Wände eines Reaktionsgefäßes bilden.

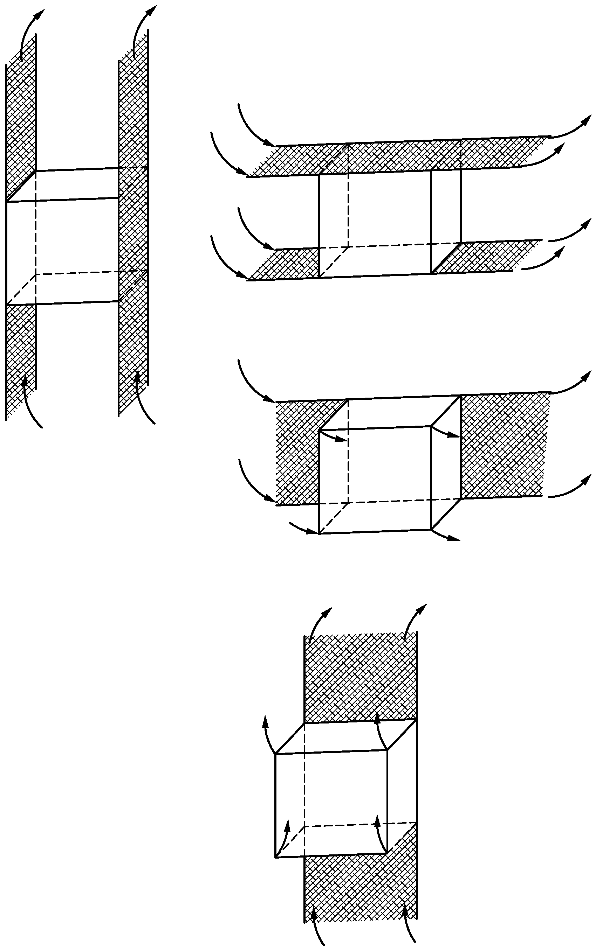

Das Prinzip dieser speziellen Reaktoren wird in folgendem Beispiel beschrieben: Hier wurde eine Kubusform gewählt, die aus acht Plattenstreifen gebildet wird, die entweder jede für sich eine kreisförmig geschlossene Schleife bilden, die kontinuierlich rotiert, oder aus acht hin- und hergehenden längeren Streifen besteht (schematisch in der Abbildung skizziert).

Die Reaktoren befinden sich in einem Kühlbad - vorzugsweise Wasser. Je nach ihrer Erhitzung wird die Geschwindigkeit der sie bildenden rotierenden oder hin- und her gehenden Platten so eingestellt, daß sie gerade nicht schmelzen können. Bei einer Reaktorgröße von z. B. einem Kubikmeter Inhalt muß sich jede Platte um einen Meter pro Sekunde oder 3,6 km pro Stunde bewegen, wenn sie der Prozeßhitze für diese Zeit ausgesetzt sein soll. Bei einer Rotationsgeschwindigkeit von z.B. 36 km pro Stunde liegt die entsprechende Expositionszeit jeder Plattenwand bei nur einer Zehntelsekunde, was trotz der enormen Hitzeentwicklung kein Schmelzen erwarten läßt.

Im Prinzip eignet sich als Reaktor natürlich jede geschlossene Körperform, die durch in entsprechende Bewegung gesetzte, gerade oder sphärische, zueinander passende Bauteile entsteht, sofern diese jeweils zusammen einen geschlossenen Raum formen, der bei der hitzebedingten Bewegung der Einzelteile als solcher de facto erhalten bleibt. Die dabei entstehenden temporären Undichtigkeiten können zum Beispiel durch einen Überdruck der Reaktionsgase ausgeglichen werden oder etwa durch Einschluss des Reaktors in eine z.B.pulsierende Gasblase. Zur möglichsten Abdichtung des Innenraums müssen die den Reaktor formenden Platten sehr präzise eingeschliffen und aufeinander angepaßt werden, um Gasverluste zu minimieren.

Natürlich kann der Reaktor auch in ein anderes Kühlsystem eingeschlossen werden. Der hier beschriebene Einschluss in einem Wasserbad hat den Vorteil, dass der entstehende Dampf sofort in einer Turbine zur Elektrizitätserzeugung genutzt werden kann. Angesichts der enormen Reaktionstemperaturen spielt die Tatsache, dass die "Kühlung" de facto mit kochendem Wasser erfolgt, keine entscheidende Rolle.

Beschickung und Energiezufuhr eines Reaktors bedingen eine zumindest kleine Abweichung seiner Form. Hierzu kann beispielsweise eine Ecke des Reaktorgefäßes dienen, in die etwa ein doppel- oder mehrwandig gekühltes Rohr hineinreicht. Es verbindet die Energiequelle für die Kernfusion, z.B. einen Großlaser, und die erforderliche dosierte Zufuhr des Fusionsgases. Falls die Reaktionsgase nicht ausreichen, den Eintritt von Kühlflüssigkeit zu verhindern, kann der nötige Überdruck durch zusätzliche Gaszufuhr von außen eingestellt werden.

Die folgende Zeichnung erläutert schematisch das Prinzip eines solchen Reaktors, in diesem Beispiel die einfachste Ausführung eines erfindungsgemäß typischen Reaktors in Kubusform. Die sechs Seiten des skizziert dargestellten Würfels werden (nur halbseitig gezeichnet) durch die sechs schraffiert dargestellten Metallstreifen gebildet, die entweder hin- und her-bewegt werden oder auch in Radform, als geschlossene Schleifen ausgeführt sein können, also als Endlosschleifen fungieren.

## Patentansprüche

1. Reaktorsystem für die Kernfusion von zum Beispiel Wasserstoff zu Helium, **dadurch gekennzeichnet, dass** der Reaktor in Form eines Kubus ausgebildet ist, dessen ihn formende Bauteile aus hochschmelzenden Platten bestehen und sich in einem Kühlmedium so bewegen, daß sie durch die Reaktionswärme nicht schmelzen oder deformiert werden.

2. Als Kühlmedium dient vorzugsweise Wasser, das durch die Reaktionswärme zum Sieden erhitzt wird. Der entstehende Wasserdampf treibt zum Beispiel Turbinen für die Elektrizitätserzeugung. Die anfallende enorme Wärme kann außerdem in vielfältigster Form, auch zu Heizungs- und chemischen Reaktionszwecken, genutzt werden.

3. Außer in Kubusform kann der Reaktor auch in jeder anderen sphärisch geschlossenen Form ausgeführt werden, deren sich bewegende Teile von einem Kühlmedium umspült werden, das die extremen Temperaturen der Fusion bewältigt.
